# EUROPEAN PATENT APPLICATION

(11) **EP 4 744 784 A1**
(43) Date of publication of application: **20.05.2026**
(21) Application number: 25790598.4
(22) Date of filing: 14.04.2025
(51) Int. Cl.: B05C 5/02, B05C 11/10, H01M 4/04

(54) **DIE COATER**

(30) Priority: 17.04.2024 KR 20240051305
(71) Applicant: LG Energy Solution, Ltd., Seoul 07335 (KR)
(72) Inventor: PARK, Min Gu, Daejeon 34122 (KR); MOON, Young Gyu, Daejeon 34122 (KR); CHOI, Min Hyuck, Daejeon 34122 (KR); KIM, Guk Tae, Daejeon 34122 (KR); LIM, Chae Ryeun, Daejeon 34122 (KR); KIM, Min Cheol, Daejeon 34122 (KR)
(74) Representative: Plasseraud IP
(86) International application number: PCT/KR2025/005045
(87) International publication number: WO 2025/220985

(57) **Abstract**

Embodiments provide a die coater. The die coater includes a first die with a manifold, a body shim coupled to the first die, and a spacer shim coupled to the first die, in which the spacer shim includes a cover portion extending in a first direction and covering the manifold and a first protrusion connected to the cover portion and protruding in a second direction perpendicular to the first direction, the first direction is a direction in which electrode slurry is discharged, and the body shim includes a body extending in the second direction, a wing connected to an end portion of the body in the second direction, and a second protrusion protruding from the wing in the second direction.

## Description

### [Technical Field]

The present disclosure relates to a die coater.

This application claims the benefit of priority based on Korean Patent Application No. 10-2024-0051305, filed on April 17, 2024, and the entire content of the Korean patent application is incorporated herein by reference.

### [Background Art]

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

Electrodes of a secondary battery are most important components of the secondary battery in terms of an energy density. The electrodes of the secondary battery may be formed through a coating process, a roll press process, a drying process, a slitting process, and a notching process. Among these processes, the coating process is a process of applying a coating material containing an active material onto an electrode plate and may be performed by a die coater.

### [Disclosure]

### [Technical Problem]

The present disclosure is directed to providing a die coater with improved coating performance.

### [Technical Solution]

Embodiments of the present disclosure provide a die coater. The die coater includes a first die with a manifold, a body shim coupled to the first die, and a spacer shim coupled to the first die, in which the spacer shim includes a cover portion extending in a first direction and covering the manifold and a first protrusion connected to the cover portion and protruding in a second direction perpendicular to the first direction, the first direction is a direction in which electrode slurry is discharged, and the body shim includes a body extending in the second direction, a wing connected to an end portion of the body in the second direction, and a second protrusion protruding from the wing in the second direction.

The second protrusion may protrude toward the cover portion.

The first protrusion may protrude toward the wing.

The first protrusion and the second protrusion may be staggered with each other.

The wing may include a first portion connected to the body and extending in the first direction, and a second portion connected to the first portion and extending in the second direction, and the second protrusion may protrude from the second portion in the second direction.

The first protrusion may overlap the second portion of the wing in the second direction, and the second protrusion may overlap the cover portion in the second direction.

The first protrusion and the second protrusion may overlap each other in the first direction.

The spacer shim may have a Γ-shape.

The first protrusion may be connected to an end portion of the cover portion in the first direction.

The first protrusion may be spaced apart from an end portion of the cover portion in the first direction.

The die coater may further include fixing pins configured to fix the spacer shim to the first die, the spacer shim may include slots corresponding to the fixing pins, and lengths of the slots in the first direction may be greater than lengths of the slots in the second direction.

The die coater may further include fixing pins configured to fix the spacer shim to the first die, the spacer shim may include slots corresponding to the fixing pins, and lengths of the slots in the first direction may be less than lengths of the slots in the second direction.

Embodiments provide a die coater. The die coater includes a first die with a manifold, a body shim coupled to the first die, and a spacer shim coupled to the first die, and the spacer shim has a Γ-shape.

### [Advantageous Effects]

According to embodiments of the present disclosure, the leakage of electrode slurry due to misalignment between a spacer shim and a body shim can be prevented, thereby improving the reliability and yield of a coating process.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIG. 1 illustrates secondary battery manufacturing equipment according to embodiments.
FIG. 2 is an exploded perspective view for describing a die coater according to embodiments.
FIG. 3 is a plan view of a first die and a shim.
FIG. 4 illustrates a layout of a body shim and a spacer shim according to embodiments.
FIG. 5 illustrates a layout of a body shim and a spacer shim according to embodiments.
FIG. 6 illustrates a layout of a body shim and a spacer shim according to embodiments.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

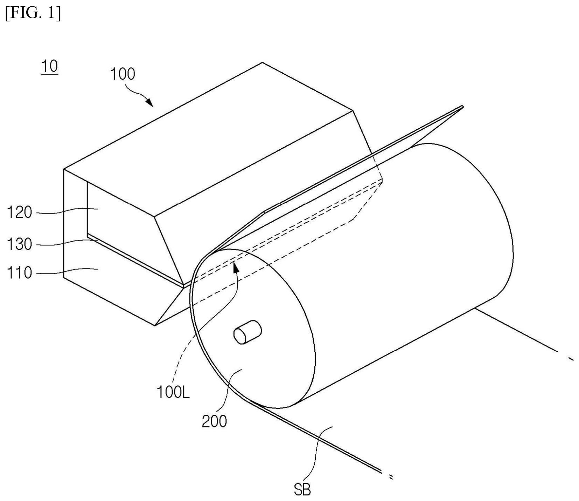

FIG. 1 illustrates secondary battery manufacturing equipment 10 according to embodiments.

According to embodiments, the secondary battery manufacturing equipment 10 may include a die coater 100 and rolls 200. The die coater 100 may be configured to discharge a coating material. A portion of the die coater 100 from which the coating material is discharged may be referred to as a lip 100L. According to embodiments, the die coater 100 may be configured to apply the coating material onto a current collector SB. The coating material may include electrode slurry.

The electrode slurry may be used to manufacture an electrode of a secondary battery. The electrode slurry may include an electrode active material, a conductive additive, a binder, and a solvent. The electrode slurry may be prepared by dissolving the electrode active material, the conductive additive, the binder, etc. in the solvent. The solvent may disperse the electrode active material and the like. The solvent may be an aqueous solvent or a nonaqueous solvent. The solvent may include dimethyl sulfoxide (DMSO), isopropyl alcohol, N-methylpyrrolidone (NMP), acetone, water or a mixture thereof. An amount of the solvent to be used may be determined based on target viscosity of the electrode slurry. Parameters that determine the amount of the solvent to be used include a thickness to which the electrode slurry is to be applied, manufacturing yield, and workability.

A positive electrode active material is a material that may cause an electrochemical reaction. The positive electrode active material may be a lithium transition metal oxide. For example, the positive electrode active material may include: a layered compound substituted with one or more transition metal, e.g., lithium cobalt oxide (LiCoO₂) or lithium nickel oxide (LiNiO₂); lithium manganese oxide substituted with one or more transition metal; lithium nickel-based oxide expressed by a chemical formula of LiNi_{1-y}M_{y}O₂ (here, M is Co, Mn, Al, CU, Fe, Mg, B, Cr, Zn or Ga, and 0.01≤y≤0.7); lithium nickel cobalt manganese compound oxide expressed by a chemical formula of Li_{1+z}Ni_{b}Mn_{c}Co_{1-(b+c+d)}M_{d}O₍₂₋ₑ₎A, e.g., Li_{1+z}Ni_{1/3}Co_{1/3}Mn_{1/3}O₂ or Li_{1+z}Ni_{0.4}Mn_{0.4}CO_{0.2}O₂ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si or Y, and A is F, P or Cl); or olivine-based lithium metal phosphate expressed by a chemical formula of Li₁₊ₓM_{1-y}M'_{y}PO_{4-z}X_{z} (here, M is a transition metal, and more particularly, Fe, Mn, Co or Ni, M' is Al, Mg or Ti, X is F, S or N, -0.5≤x≤+0.5, 0≤y≤0.5, and 0≤z≤0.1).

A negative electrode active material may include, for example, carbon such as non-graphitized carbon or graphite-based carbon. The negative electrode active material may include, for example, a metal composite oxide such as LiₓFe₂O₃ (0≤x≤1), LiₓWO₂ (0≤x≤1), or SnₓMe₁₋ₓMe'_{y}O_{z} (here, Me is Mn, Fe, Pb, or Ge, Me' is Al, B, P, Si, a Group I element, a Group II element or a Group III element of the periodic table, or halogen, 0<x≤1, 1≤y≤3, and 1≤z≤8).The negative electrode active material may include, for example, lithium metal, lithium alloy, silicon-based alloy, or tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅. The negative electrode active material may include, for example, a conductive polymer such as polyacetylene, a Li-Co-Ni-based material, etc.

The conductive additive may have conductivity without causing a chemical change in a finally manufactured secondary battery. For example, the conductive additive may include: graphite such as natural graphite or artificial graphite; carbon black such as acetylene black, Ketjen black, channel black, furnace black, lamp black or thermal black; conductive fibers such as carbon fibers or metal fibers; carbon fluoride; metal powder such asaluminum or nickel powder; conductive whiskey such as zinc oxide or potassium titanate; conductive metal oxide such as titanium oxide; polyphenylene derivatives, or the like.

The binder may enhance a binding force between the active material and the conductive additive and a binding force with respect to an electrode plate. The binder may include, for example, polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, ethylene-propylene-diene ter polymer (EPDM), sulfonated EPDM, styrene-butyrene rubber, fluorine rubber, various copolymers, or the like.

A thickness of a positive electrode current collector may be in a range of about 3 µm to about 500 µm. The positive electrode current collector may have high conductivity without causing a chemical change in a finally manufactured secondary battery. The positive electrode current collector may include, for example, stainless steel, nickel, titanium, baked carbon, or aluminum. The positive electrode current collector may include stainless steel surface-treated with carbon, nickel, titanium, silver, or the like. A surface of the positive electrode current collector may include a fine uneven structure to increase the adhesion of the active material. The positive electrode current collector may be in the form of a film, sheet, foil, net, porous body, foam or non-woven fabric.

A thickness of a negative electrode current collector may be in a range of about 3 µm to about 500 µm. The negative electrode current collector may have high conductivity without causing a chemical change in a finally manufactured secondary battery. The negative electrode current collector may include copper, stainless steel, aluminum, nickel, titanium, baked carbon, or aluminum-cadmium alloy. The negative electrode current collector may include stainless steel surface-treated with carbon, nickel, titanium, silver, or the like. A surface of the negative electrode current collector may include a fine uneven structure to increase the adhesion of the active material. The negative electrode current collector may be in the form of a film, sheet, foil, net, porous body, foam or non-woven fabric.

### (Second embodiment)

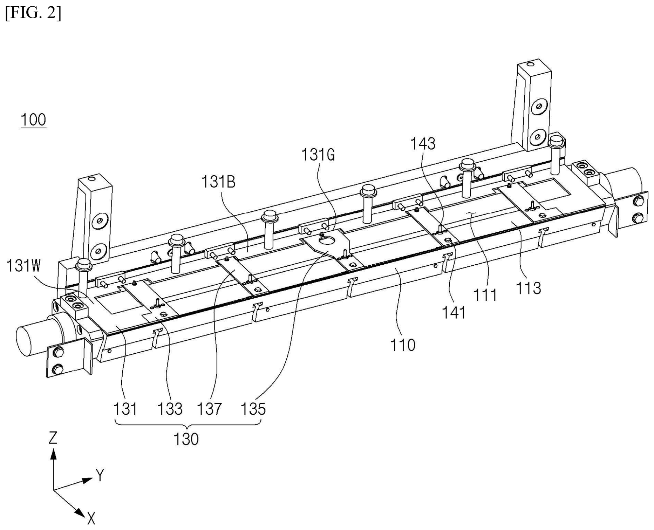

FIG. 2 is an exploded perspective view for describing a die coater 100 according to embodiments. In FIG. 2, the second die 120 (see FIG. 1) is omitted.

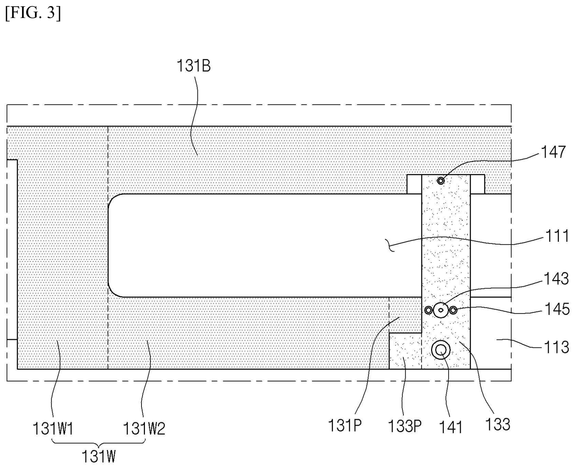

FIG. 3 is a plan view of a first die 110 and a shim 130.

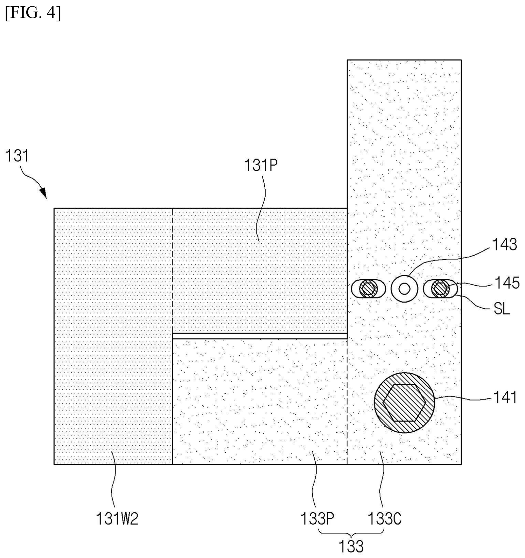

FIG. 4 illustrates a layout of a body shim 131 and a spacer shim 133 according to embodiments.

Referring to FIGS. 1 to 4, the die coater 100 may include the first die 110, the second die 120, the shim 130, shim fixing devices 141, shim fixing pins 143, shim fixing pins 145, and shim fixing devices 147.

The first die 110 may include a manifold 111 and an electrode slurry supply path connected to the manifold 111. An electrode slurry may flow into the manifold 111 through the electrode slurry supply path. The manifold 111 may be an empty space configured to accommodate the electrode slurry. After the manifold 111 is filled with the electrode slurry, the electrode slurry may be discharged to the outside of the die coater 100.The electrode slurry may be discharged from the manifold 111 to the outside through slits defined by the shim 130 and a land part 113.

The manifold 111 may have a well shape with a certain depth from the land part 113. The manifold 111 may include an inclined surface and thus the electrode slurry may be stably discharged from the die coater 100.

The shim 130 may be interposed between the first die 110 and the second die 120. The first die 110 may be in contact with a lower surface of the shim 130.The second die 120 may be in contact with an upper surface of the shim 130. The shim 130 may include a body shim 131 and spacer shims 133, 135 and 137.

The body shim 131 may be substantially parallel to each of an X-axis direction and a Y-axis direction and be substantially perpendicular to a Z-axis direction. The body shim 131 may include a body 131B and wings 131W.

The body 131B may extend in the Y-axis direction. The body 131B may be a plate whose width in the X-axis direction is less than a length thereof in the Y-axis direction. Here, the X-axis direction may be a direction in which the electrode slurry is discharged, and the Y-axis direction may be substantially perpendicular to the X-axis direction.

The body 131B may include a plurality of grooves 131G. Each of the plurality of grooves 131G may be in a side of the body 131B adjacent to the manifold 111 (e.g., a side of the body 131B overlapping the manifold 111) among sides of the body 131B parallel to the Y-axis direction. Each of the plurality of grooves 131G may be recessed inward from the sides of the body 131B parallel to the Y-axis direction.

The plurality of grooves 131G may correspond to the spacer shims 133, 135 and 137.The plurality of grooves 131G may expose a portion of the first die 110. Each of the spacer shims 133, 135 and 137 may be partially inserted into a corresponding one of the plurality of grooves 131G. The spacer shims 133, 135, and 137 may be fixed to the portion of the first die 110 exposed by the plurality of grooves 131G via the fixing devices 147. The fixing devices 147 may be, for example, bolts.

According to embodiments, a width of each of the plurality of grooves 131G in the Y-axis direction may be different from a width of the corresponding one of the spacer shims 133, 135 and 137 in the Y-axis direction. According to embodiments, the width of each of the plurality of grooves 131G in the Y-axis direction may be greater than the width of the corresponding one of the spacer shims 133, 135 and 137 in the Y-axis direction. Accordingly, the plurality of grooves 131G may not only guide the coupling of the spacer shims 133, 135 and 137 but also provide a degree of freedom to the spacer shims 133, 135 and 137 in the Y-axis direction, so that positions of the spacer shims 133, 135 and 137 may be precisely adjusted in the Y-axis direction.

The wings 131W may be connected to an end portion of the body 131B in the Y-axis direction. Each of the wings 131W may include a first portion 131W1 extending in the X-axis direction and a second portion 131W2 extending in the Y-axis direction. The first portion 131W1 may be connected to the body 131B. The second portion 131W2 may be connected to the first portion 131W1. The body shim 131 may further include protrusions 131P protruding from the second portions 131W2 of the wings 131W in the Y-axis direction. Accordingly, each of the wings 131W may include a stepped structure facing the spacer shims 133. A distance between the protrusion 131P and the lip 110B may be different from a distance between the protrusion 131P and the manifold 111. The distance between the protrusion 131P and the lip 110B may be greater than the distance between the protrusion 131P and the manifold 111.

The spacer shims 133, 135 and 137 may be interposed between the wings 131W in the Y-axis direction. Each of the spacer shims 133, 135 and 137 may overlap one of the wings 131W in the Y-axis direction.

According to embodiments, the spacer shims 133 may be adjacent to edges of the shim 130 in the Y-axis direction. According to embodiments, the spacer shims 133 may be adjacent to the wings 131W. According to embodiments, the spacer shims 133 may be in contact with the wings 131W but embodiments are not limited thereto. Each of the spacer shims 133 may be referred to as an edge spacer shim or a first spacer shim.

According to embodiments, the spacer shim 135 may be on a central part of the shim 130 in the Y-axis direction. According to embodiments, the spacer shim 135 may be interposed between the spacer shims 133.The spacer shim 135 may be referred to as a center spacer shim or a second spacer shim.

According to embodiments, the spacer shims 137 may be interposed between the spacer shims 133 and the spacer shim 135. Each of the spacer shims 137 may be referred to as an intermediate spacer shim or a third spacer shim.

The spacer shims 133, 135, and 137 may further include an insulating flow path for providing a flow path of insulating slurry. In this case, the spacer shim 133 may include one insulating flow path, and each of the spacer shims 135 and 137 may include two insulating flow paths.

The spacer shims 133, 135 and 137 may partially cover the manifold 111. The spacer shims 133, 135 and 137 may overlap the manifold 111 in the Z-axis direction. In FIG. 3, the spacer shims 133, 135 and 137 may divide the manifold 111 into four regions and thus the die coater 100 may be configured to form four retaining lanes simultaneously by performing a coating process once.

Technicians of ordinary skill in the art will be able to easily derive a die coater configured to form various numbers of retaining lanes, e.g., one, two, eight, sixteen or thirty two retaining lanes, based on the description herein. For example, a die coater configured to form eight retaining lanes may include a shim that includes two edge spacer shims, one center spacer shim, and six intermediate spacer shims.

Referring to FIGS. 2 to 5, the shim fixing devices 141 and the shim fixing pins 143 may be partially inserted into the land part 113 of the first die 110. The shim fixing devices 141 and the shim fixing pins 143 may be configured to fix the spacer shims 133 to the land part 113 of the first die 110.

The shim fixing devices 141 may be, for example, bolts but are not limited thereto. The shim fixing pins 143 may be, for example, bidirectional pins. Accordingly, the shim fixing pins 143 may be configured to fix the second die 120 together with the shim 130, in addition to the first die 110.

The shim fixing pins 145 may be bidirectional pins. Accordingly, the shim fixing pins 145 may be configured to fix the second die 120 together with the shim 130, in addition to the first die 110. The spacer shims 133, 135, and 137 may include fastening holes corresponding to the shim fixing devices 141, the shim fixing pins 143, and the shim fixing devices 147 (i.e., fastening holes into which the shim fixing devices 141, the shim fixing pins 143 and the shim fixing devices 147 are inserted and which are penetrated by the shim fixing devices 141, the shim fixing pins 143 and the shim fixing devices 147).

The spacer shims 133, 135, and 137 may include slots SL corresponding to the shim fixing pins 145 (i.e., slots SL into which the shim fixing pins 145 are inserted and which are penetrated by the shim fixing pins 145). In the present example, a length of each of the slots SL in the Y-axis direction may be greater than a length thereof in the X-axis direction and thus a degree of freedom may be provided to the spacer shims 133, 135, and 137 in the Y-axis direction during alignment of the spacer cores 133, 135, and 137.

A cover portion 133C may overlap the manifold 111 in the Z-axis direction. The cover portion 133C may cover the manifold 111. The cover portion 133C may divide the manifold 111 into two or more parts.

Each of the spacer shims 133 may have an approximately Γ-shape or a bent shape. Each of the spacer shims 133 may include the cover portion 133C and a protrusion 133P. The cover portion 133C may extend from the body 131B in the Y-axis direction, and the protrusion 133P may be connected to an end of the cover portion 133C in the Y-axis direction and extend in the X-axis direction.

The protrusion 133P may protrude from an edge of the cover portion 133C (e.g., an edge parallel to the X-axis direction). The protrusion 133P may protrude toward the wing 131W. The protrusion 133P may be connected to an end portion of the cover portion 133C in the Y-axis direction. Accordingly, each of the spacer shims 133 may include a stepped structure facing the second portions 131W2 of the wings 131W.

A distance between the protrusion 133P and the lip 110B may be different from a distance between the protrusion 133P and the manifold 111. The distance between the protrusion 133P and the lip 110B may be less than the distance between the protrusion 133P and the manifold 111.

The protrusion 131P may be staggered with the protrusion 133P. The protrusion 131P may not overlap the protrusion 133P in the Y-axis direction. The protrusion 131P may overlap the cover portion 133C in the Y-axis direction, and the protrusion 133P may overlap the second portion 131W2 of the wing 131W in the Y-axis direction. The protrusion 131P may overlap the protrusion 133P in the X-axis direction.

When the die coater 100 is assembled, the spacer shims 133 are aligned with respect to the end portion of the land part 113 in the X-axis direction. More specifically, when the die coater 100 is assembled, the spacer shims 133 may be aligned such that end portions of the spacer shims 133 in the X-axis direction match the end portion of the land part 113 in the X-axis direction, and in this case, an alignment condition may be referred to as a zero offset condition.

When there is a manufacturing error between a body shim and a spacer shim, the electrode slurry may leak through a space between the body shim and the spacer shim, thus reducing the yield and reliability of the coating process.

Under the zero offset condition, the positions of the spacer shims 133 may be adjusted to cause the protrusion 131P to be in contact with the cover portion 133C and/or the protrusion 133P to be in contact with the second portion 131W2 of the wing 131W, so that the leakage of the electrode slurry may be prevented by the protrusion 131P and the protrusion 133P overlapping each other in the X-axis direction, thereby improving the yield and reliability of the coating process.

### (Third Embodiment)

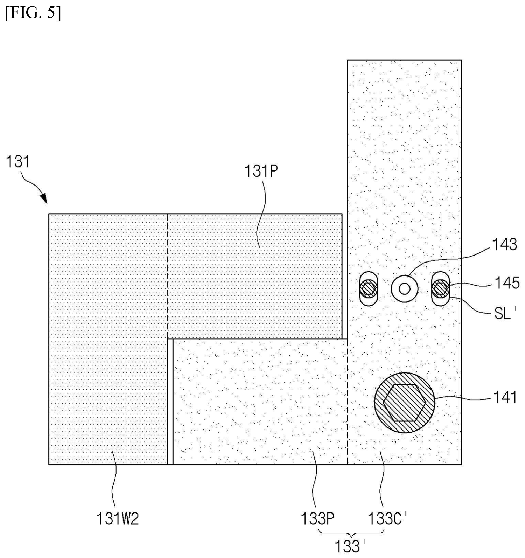

FIG. 5 illustrates a layout of a body shim 131 and a spacer 133' according to embodiments.

Referring to FIG. 5, the body shim 131 is substantially the same as that described above with reference to FIGS. 2 to 4.The spacer shim 133' is the same as the spacer shim 133 of FIG. 4, except that the spacer shim 133' includes slots SL' instead of slots SL of FIG. 4.The spacer shim 133' may replace the spacer shim 133 of FIGS. 2 to 4.

In the present example, the slots SL' may be provided in a cover portion 133C' of the spacer shim 133' and a length of each of the slots SL' in the X-axis direction may be greater than a length thereof in the Y-axis direction, and thus, a degree of freedom may be provided to the spacer shims 133', 135, and 137 in the X-axis direction when the spacer shims 133', 135, and 137 are aligned.

According to embodiments, even when there is a manufacturing error between the body shim 131 and the spacer shim 133', the position(s) of the body shim 131 and/or the spacer shim 133' may be adjusted to cause a protrusion 131P and a protrusion 133P to be in contact with each other so as to prevent the leakage of the electrode slurry by the protrusion 131P and the protrusion 133P overlapping each other in the X-axis direction, thereby improving the yield and reliability of the coating process.

### (Fourth Embodiment)

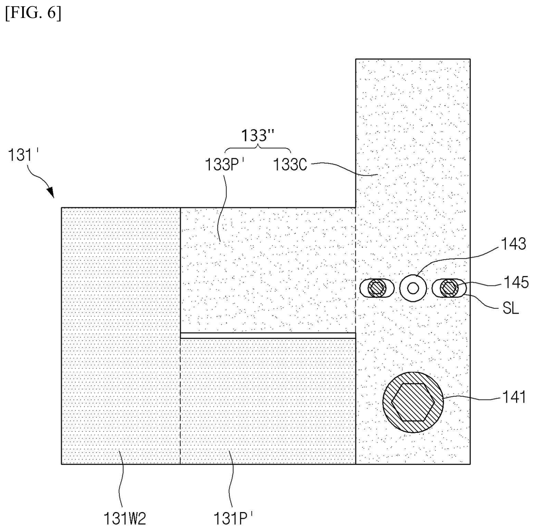

FIG. 6 illustrates a layout of a body shim and a spacer according to embodiments.

FIG. 6 illustrates a layout of a body shim 131' and a spacer 133" according to embodiments.

Referring to FIG. 6, the body shim 131' is substantially the same as the body shim 131 described above with reference to FIGS. 2 to 4, except for a position of a protrusion 131P'.In addition, the spacer shim 133" is the same as the spacer shim 133 of FIG. 4 except for a position of a protrusion 133P'.The body shim 131' and the spacer shim 133" may replace the body shim 131 and the spacer shim 133 of FIGS. 2 to 4.

The protrusion 131P' maybe staggered with the protrusion 133P'. The protrusion 131P' may not overlap the protrusion 133P' in the Y-axis direction. The protrusion 131P' may overlap a cover portion 133C in the Y-axis direction, and the protrusion 133P' may overlap a second portion 131W2 in the Y-axis direction. The protrusion 131P' may overlap the protrusion 133P' in the X-axis direction.

Positions of the protrusion 131P' and the protrusion 133P' and the positions of the protrusion 131P of FIG. 4 and the protrusion 133P of FIG. 4 are reversed. A distance between the protrusion 131P' and a lip 110B may be different from a distance between the protrusion 131P' and a manifold 111.The distance between the protrusion 131P' and the lip 110B may be less than the distance between the protrusion 131P' and the manifold 111. The protrusion 133P' may be spaced apart from the center of the cover portion 133C in the X-axis direction. A distance between the protrusion 133P' and the lip 110B may be different from a distance between the protrusion 133P' and a manifold 111.The distance between the protrusion 133P' and the lip 110B may be greater than the distance between the protrusion 133P' and the manifold 111.

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

## Claims

1. A die coater comprising:
a first die with a manifold;
a body shim coupled to the first die; and
a spacer shim coupled to the first die,
wherein the spacer shim includes a cover portion extending in a first direction and covering the manifold and a first protrusion connected to the cover portion and protruding in a second direction, wherein the first direction is a direction in which electrode slurry is discharged and the second direction is perpendicular to the first direction, and
the body shim includes a body extending in the second direction, a wing connected to an end portion of the body in the second direction, and a second protrusion protruding from the wing in the second direction.

2. The die coater of claim 1, wherein the second protrusion protrudes toward the cover portion.

3. The die coater of claim 1, wherein the first protrusion protrudes toward the wing.

4. The die coater of claim 1, wherein the first protrusion and the second protrusion be staggered with each other.

5. The die coater of claim 1, wherein the wing includes a first portion connected to the body and extending in the first direction, and a second portion connected to the first portion and extending in the second direction, and
the second protrusion protrudes from the second portion in the second direction.

6. The die coater of claim 5, wherein the first protrusion overlaps the second portion of the wing in the second direction, and
the second protrusion overlaps the cover portion in the second direction.

7. The die coater of claim 1, wherein the first protrusion and the second protrusion overlap each other in the first direction.

8. The die coater of claim 1, wherein the spacer shim has a Γ-shape.

9. The die coater of claim 1, wherein the first protrusion is connected to an end portion of the cover portion in the first direction.

10. The die coater of claim 1, wherein the first protrusion is spaced apart from an end portion of the cover portion in the first direction.

11. The die coater of claim 1, further comprising fixing pins configured to fix the spacer shim to the first die, and
wherein the spacer shim includes slots corresponding to the fixing pins, and
lengths of the slots in the first direction are greater than lengths of the slots in the second direction.

12. The die coater of claim 1, further comprising fixing pins configured to fix the spacer shim to the first die, and
wherein the spacer shim includes slots corresponding to the fixing pins, and
lengths of the slots in the first direction are less than lengths of the slots in the second direction.

13. A die coater comprising:
a first die with a manifold;
a body shim coupled to the first die; and
a spacer shim coupled to the first die,
wherein the spacer shim has a Γ-shape.
